# EUROPEAN PATENT APPLICATION

(11) **EP 2 305 028 A1**
(43) Date of publication of application: **06.04.2011**
(21) Application number: 10179076.4
(22) Date of filing: 23.09.2010
(51) Int. Cl.: A01M 1/02

(54) **Insect trap**

(30) Priority: 28.09.2009 US 586785
(71) Applicant: Kuus, Ronald, Toronto, ON MIB IY4 (CA)
(72) Inventor: Kuus, Ronald, Toronto, ON MIB IY4 (CA)
(74) Representative: Boyce, Conor

(57) **Abstract**

An insect trap comprises a base including a shaped hollow body to define a capture space. The body has an access opening. A cover is selectively receivable on the base at the access opening to enclose the capture space. The cover includes a plurality of tunnels for entry of insects into the capture space. Each tunnel comprises a bore through the cover and an elongate tubular wall extending inwardly from the cover surrounding the bore and opening at an outlet into the capture space.

## Description

### FIELD OF THE INVENTION

This invention relates to an insect trap and, more particularly, to a fruit fly trap adapted to hold an attractant.

### BACKGROUND OF THE INVENTION

People have long sought to eliminate insects from the home and elsewhere using various products. Some of these products comprise insecticides placed outside the home to prevent entry or inside the home to kill the insects. Other known products include repellants which keep the insects away. Many of these products comprise chemical formulations which may be undesirable in certain situations.

Various insect traps have been used to capture insects without the use of any exposed chemicals. With any such trap, it is necessary to attract the insect into the trap but then prevent exit from the trap. With animals, this is often done with trap doors or the like which use a spring action to close a door to entrap the animal. However, such a trap is generally useful only with larger animals where the weight of the animal is used to actuate the trap. Greater difficulties exist when trying to trap small insects.

One such small insect which can prove difficult to trap is a fruit fly. Fruit flies are attracted to various food products, particularly fruit. While people often like to store fruit in the open, the fruit itself becomes an attractant for the fruit flies. Fruit flies are very small, typically measuring about 1/8" (3mm) in length.

Thus, there is desired an insect trap capable of capturing a fruit fly or the like by simulating the fruit product in order to attract the fruit fly into a capture space and subsequently prevent escape from the capture space.

The present invention is directed to solving one or more of the problems discussed above in a novel and simple manner.

### SUMMARY OF THE INVENTION

In accordance with the invention, there is provided an insect trap adapted to capture small insects.

Broadly, there is disclosed in accordance with one aspect of the invention an insect trap comprising a base including a shaped hollow body to define a capture space. The body has an access opening. A cover is selectively receivable on the base at the access opening to enclose the capture space. The cover includes a plurality of tunnels for entry of insects into the capture space. Each tunnel comprises a bore through the cover and an elongate tubular wall extending inwardly from the cover surrounding the bore and opening at an outlet into the capture space.

Preferably, the cover is of unitary one piece construction with the tunnels integrally formed on the cover.

Preferably, the base and cover are formed of plastic.

Preferably, the tubular wall is cylindrical.

Preferably, the tubular wall is frusto-conical.

Preferably, the bore has a greater size than the outlet.

Preferably, the tubular wall has a length substantially greater than size of the outlet.

Preferably, the bore and the outlet have a size in the range of about 0.4mm to 5mm.

Preferably, the tunnel has a length in the range of about 1mm to 7mm.

Preferably, the bore has a size of about 1mm, the outlet has a size of about 1.25mm and the tunnel has a length of about 7 mm.

In accordance with another aspect of the invention an insect trap comprising a base including an outer wall in the shape of a portion of a select food product to define a hollow body having a capture space for housing an attractant. The outer wall has an open upper end to provide an access opening. A cover includes a top wall in the shape of a remaining portion of the select food product selectively receivable on the base at the access opening to enclose the capture space. At least one of the base and the cover includes a plurality of tunnels for entry of insects into the capture space. Each tunnel comprises a bore through the associated wall and an elongate tubular wall extending inwardly from the associated wall surrounding the bore and opening at an inlet into the capture space.

Further features and advantages of the invention will be readily apparent from the specification and from the drawings.

### BRIEF DESCRIPTION OF THE DRAWINGS

Fig. 1 is a side elevation view of an insect trap in accordance with the invention;
Fig. 2 is a top plan view of the insect trap of Fig. 1;
Fig. 3 is a sectional view taken along the line 3-3 of Fig. 2;
Fig. 4 is a perspective view corresponding to the sectional view of Fig. 3; and
Fig. 5 is a perspective view of an underside of the cover of the insect trap of Fig. 1.

### DETAILED DESCRIPTION OF THE INVENTION

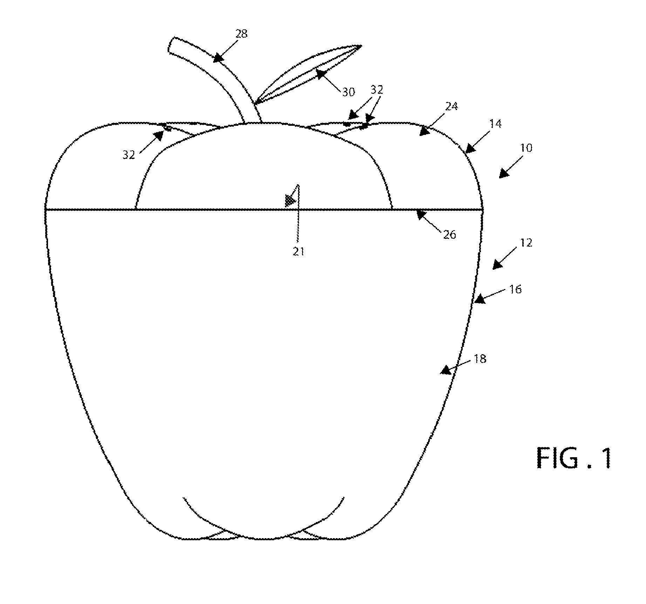

Referring initially to Fig. 1, an insect trap 10 in accordance with the invention is illustrated. The insect trap 10 is particularly useful for trapping fruit flies, although it may be used for trapping other insects, as will be apparent. In the illustrated embodiment of the invention, the insect trap 10 is formed to resemble a fruit product. Particularly, the illustrated insect trap 10 is in the form of an apple.

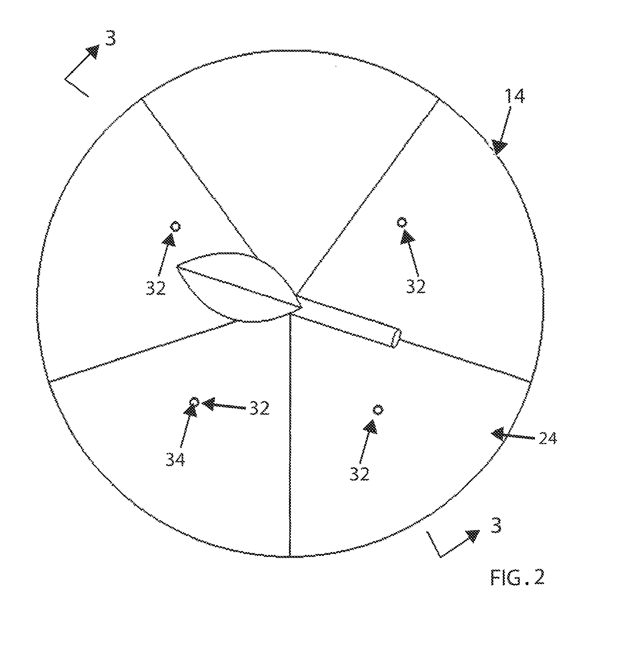

Referring also to Figs. 2-4, the insect trap 10 comprises a base 12 and a cover 14. Each of the base 12 and cover 14 are of unitary, one piece construction and may be, for example, molded of plastic.

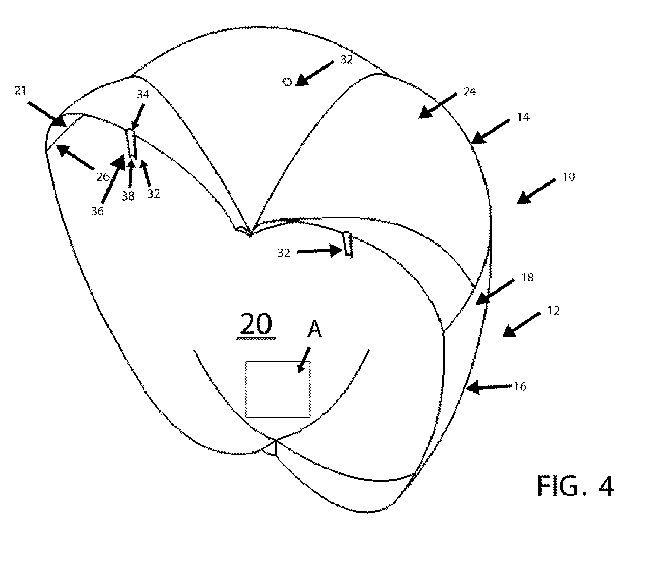

The base 12 includes a shaped hollow body 16 formed by an outer wall 18 to define an interior capture space 20 for housing an attractant A, see Fig. 4. The wall 18 has an open upper end 21 to define an access opening 22, as is apparent.

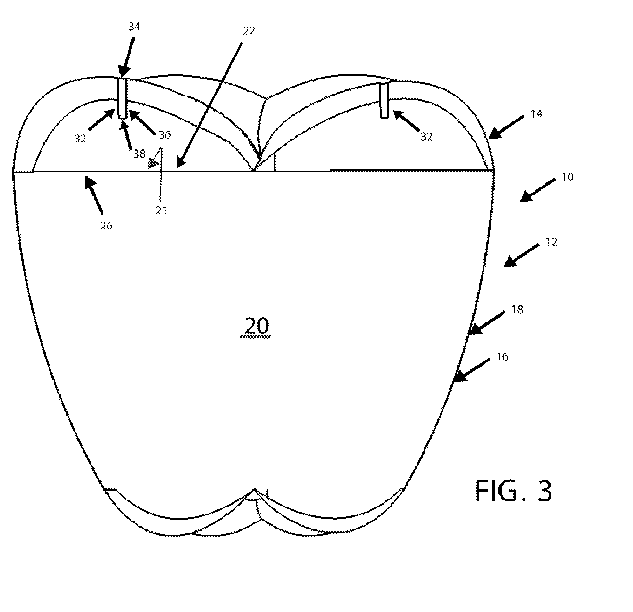

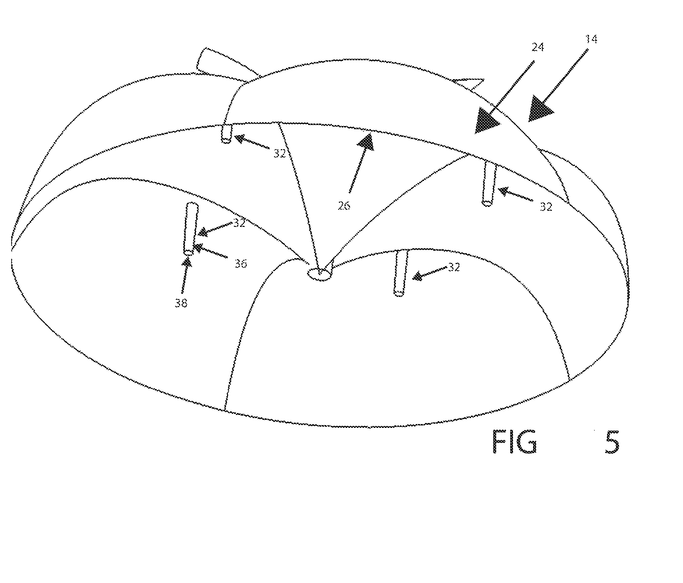

The cover 14, see also Fig. 5, includes a top wall 24 in the shape of the top of an apple having a bottom edge 26. The bottom edge 26 is generally circular and is receivable on the base top opening 21 to enclose the capture space 20, as particularly illustrated in Figs. 3 and 4. A stem 28 extends upwardly from a central portion of the top wall 24 and a leaf 30 is connected thereto. As such, the insect trap 10 generally resembles a conventional apple and may be the size of a typical apple. Moreover, the base 12 and cover 14 may be of a suitable coloring to resemble an apple.

The cover 14 can be removed from the base 12 to provide access to the capture space 20. Although not shown, the cover 14 or base 12 may include a peripheral internal flange to be telescopically received in the other of the base 12 or cover 14. Other mating structures, or hinges, or the like, may also be used to retain the cover 14 on the base 12, as will be readily apparent.

As is apparent, the insect trap 10 could be configured with other designs, such as an orange, a pear, etc., or of other food products as well.

In accordance with the invention, the cover 14 includes a plurality of tunnels 32 for entry of insects into the capture space 20. In the illustrated embodiment of the invention, the cover 14 comprises four tunnels 32. As is apparent, the tunnels 32 could alternatively, or additionally, be provided in the base 12.

For simplicity, only one of the tunnels 32 is described in detail herein, it being understood that all of the tunnels 32 are generally similar.

The tunnel 32 comprises a circular bore 34 through the top wall 24 to define an inlet. An elongate tubular wall 36 extends inwardly from the top wall 24 surrounding the bore 34. The tubular wall 36 opens at an outlet 38 into the capture space 20.

In the illustrated embodiment of the invention, the tubular wall 36 is generally circular in cross section. As such, the tubular wall 36 may be cylindrical or advantageously, may be frusto-conical. As will be apparent, it is not required that the inlet 34 and outlet 38 be circular or that the tubular wall 36 be circular in cross section. Each could be rectangular, oval or other shape, as desired. The tunnel 32 should be sized for capturing an insect while making escape difficult.

In an exemplary embodiment of the invention, the tubular wall 36 is frusto-conical with the inlet 34 being of a larger size than the outlet 38. Likewise, the tubular wall 36 has a length substantially greater than the size of the outlet 38. As an example, the bore 34 may have a diameter on the order of 1.5mm with the outlet 38 having a diameter on the order of about 1.25 mm with the tubular wall 36 having a length of about 7mm. Most typically, the range could be on the order of 10 to 20% larger or smaller than each of these amounts. Still further, the bore 34 and the outlet 38 could have an opening in the range of 0.4mm to 5mm with the tunnel length being in the range of 1mm to 7mm.

In use, an attractant A, see Fig. 4, such as a piece of fruit, may be placed in the capture space 20 with the cover 14 positioned atop the base 12. Because of the openings provided by the tunnels 32, odor from the attractant A may be sensed outside of the insect trap 10. An insect, such as a fruit fly, could land on the cover top wall 24 proximate the tunnels 32 and eventually be attracted to the inlet 34. The insect would then pass through the tunnel 32 into the capture space 20. With the use of the tunnels 32, escape from the capture space 20 is more difficult as the tubular wall 36 extends into the capture space 20. While a fruit fly could crawl on the outside of the tubular wall 36, it would be more difficult for the fruit fly to enter the tubular wall 36 through the outlet 38. This is particularly true if the outlet 38 is of a smaller size than the inlet 34.

Thus, the insect trap 10 is designed to be of a shape and coloring so that it can be suitably placed on a countertop, or mixed with real fruit. The insect trap 10 can use an attractant such as a piece of food which is non-chemically based to attract insects into the capture space 20.

Thus, in accordance with the invention, there is provided an insect trap including a base and cover in the shape of a food product and housing a capture space with a plurality of tunnels for permitting entry of insects into the capture space but making escape from the capture space difficult.

## Claims

1. An insect trap comprising:
a base including a shaped hollow body to define a capture space, the body having an access opening; and
a cover selectively receivable on the base at the access opening to enclose the capture space,
wherein at least one of the base and the cover including a plurality of tunnels for entry of insects into the capture space, each tunnel comprising a bore through the cover or base and an elongate tubular wall extending inwardly from the cover or base surrounding the bore and opening at an outlet into the capture space.

2. The insect trap of claim 1 wherein the cover is of unitary one piece construction with the tunnels integrally formed on the cover.

3. The insect trap of claim 1 wherein the base and cover are formed of plastic.

4. The insect trap of claim 1 wherein the tubular wall is cylindrical.

5. The insect trap of claim 1 wherein the tubular wall is frusto-conical.

6. The insect trap of claim 1 wherein the bore has a greater size than the outlet.

7. The insect trap of claim 1 wherein the tubular wall has a length substantially greater than size of the outlet.

8. The insect trap of claim 1 wherein the bore and the outlet have a size in the range of about 0.4mm to 5mm.

9. The insect trap of claim 1 wherein the tunnel has a length in the range of about 1mm to 7mm.

10. The insect trap of claim 1 wherein the bore has a size of about 1.5mm, the outlet has a size of about 1.25mm and the tunnel has a length of about 7mm.

11. The insect trap of claim 1 wherein the base includes an outer wall in the shape of a portion of a select food product to define the hollow body having the capture space for housing an attractant, the outer wall having an open upper end to provide an access opening; and
wherein the cover includes a top wall in the shape of a remaining portion of the select food product selectively receivable on the base at the access opening to enclose the capture space.
